# EUROPEAN PATENT SPECIFICATION

(11) **EP 1 650 118 B1**
(45) Date of publication and mention of the grant of the patent: **10.10.2007**
(21) Application number: 04077925.8
(22) Date of filing: 22.10.2004
(51) Int. Cl.: B62H 5/14

(54) **Lock intended to be mounted on a frame of, for instance, a bicycle**
Schloss, insbesondere zur Montage auf einem Fahrradrahmen
Serrure destinée à être montée sur un cadre de bicyclette

(43) Date of publication of application: 26.04.2006
(73) Proprietor: STENMAN HOLLAND B.V., 3903 AV Veenendaal (NL)
(72) Inventor: van Wakeren, Gerrit, 3905 LR Veenendaal (NL)
(74) Representative: Winckels, Johannes Hubertus F.

(56) References cited:
- EP-A- 1 342 652
- NL-A- 7 503 742
- US-A- 4 126 024
- US-A- 6 076 381

## Description

The invention relates to a lock intended to be mounted on a frame of a bicycle, a moped or such two-wheeler, the lock being provided with a holder part and a lock pin pivotally connected to the holder part, and with a receiving part provided with a lock pin opening for receiving a free end of the lock pin with the lock in closed condition.

Such a lock is known from practice. The known lock is connected to the frame to, for instance, a fork. As a rule, the connection between the lock and frame comprises a number of welded joints. After mounting, the lock pin can be brought to a blocking position for blocking a wheel. In practice, it appears that the lock can be removed from the frame by unauthorized persons by sawing one of the joints between the lock and frame.

The object of the present invention is a lock which is well resistant to being forced, and can in particular be connected to the bicycle, moped or such two-wheeler in a relatively firm manner, with relatively simple and inexpensive means, while the lock being sawed from the frame is prevented particularly well.

According to the invention, to this end, the lock is characterized in that the holder part and receiving part are each provided with a steel blocking element for reaching into the frame, via a suitable blocking opening of this frame, for the purpose of preventing undesired disassembly of the lock.

This steel blocking element can prevent manipulation of the lock well. In particular, the blocking element forms a relatively strong barrier against the lock being sawed from the frame. For instance, in practice, a thief will have to spend much time for removing a lock according to the present invention from a frame, which will keep him from attempting to steal it. Moreover, the steel blocking element can reach into the frame and, for instance, engage the frame such that unauthorized disassembly appears possible only by permanently damaging the frame, which renders the frame, and thus the vehicle provided therewith, unsuitable for use. Preferably, each blocking element is manufactured from hardened steel, so that sawing these elements through can be prevented very well.

The invention further provides an assembly, provided with a bicycle, moped or such two-wheeler, comprising at least one frame, the assembly being characterized by the features of claim 12.

The assembly is provided with a lock according to the invention, which lock is provided on the frame. On sides proximal to the lock, the frame is provided with blocking openings. The blocking elements of the lock reach into the blocking openings of the frame, for the purpose of preventing undesired disassembly of the lock. Preferably, the receiving part and holder part of the lock have been welded to the frame, however, other connecting techniques, for instance by means of suitable gluing or the like, can also be used for attaching the lock to the frame.

The invention further provides a method which is characterized by the features of claim 14. The method comprises at least, in suitable random order:
- attaching, for instance welding, outside parts of the lock onto the frame;
- providing blocking openings in the frame; and
- inserting the blocking elements into the blocking openings.

In this manner, the lock is provided on the frame relatively sturdily and manipulation resistant. The blocking openings can, for instance, be drilled into the frame before or after the lock has been welded onto the frame.

Each lock outside part can for instance be attached at least on or adjacent the side of the frame proximal to a wheel passage, by means of a suitable attachment and, in particular, by means of a suitable inside welded joint. Preferably, outside attachment parts are provided too, located for instance at or adjacent sides of the lock remote from the wheel, for connecting the lock to the frame. Here, it is advantageous when the blocking element is provided such that the blocking element extends on a side of the first mentioned inside attachment remote from the wheel passage, along this attachment. Preferably, the blocking element extends between the inside and outside attachment parts and reaches into the frame.

In this manner, the blocking element can prevent a saw from reaching the inside lock attachment when an unauthorised person tries to saw the lock from a side of the frame remote from the wheel.

Further elaborations of the invention are described in the subclaims. Presently, the invention will be further elucidated on the basis of two exemplary embodiments, with reference to the drawing.
Fig. 1 shows a perspective view of a first exemplary embodiment of the lock provided on the aluminum fork of an aluminum frame;
Fig. 2 shows a similar view as Fig. 1 in more detail, without wheel, the lock being cut away and partly taken apart;
Fig. 3 shows a front view of the exemplary embodiment represented in Figs. 1 and 2, in a cutaway condition;
Fig. 4 shows a cross-sectional view along the line IV-IV of Fig. 3;
Fig. 5 shows a similar view as Fig. 4, in which also the internal mechanism has been represented; and
Fig. 6 shows a similar view as Fig. 4 of a second exemplary embodiment.

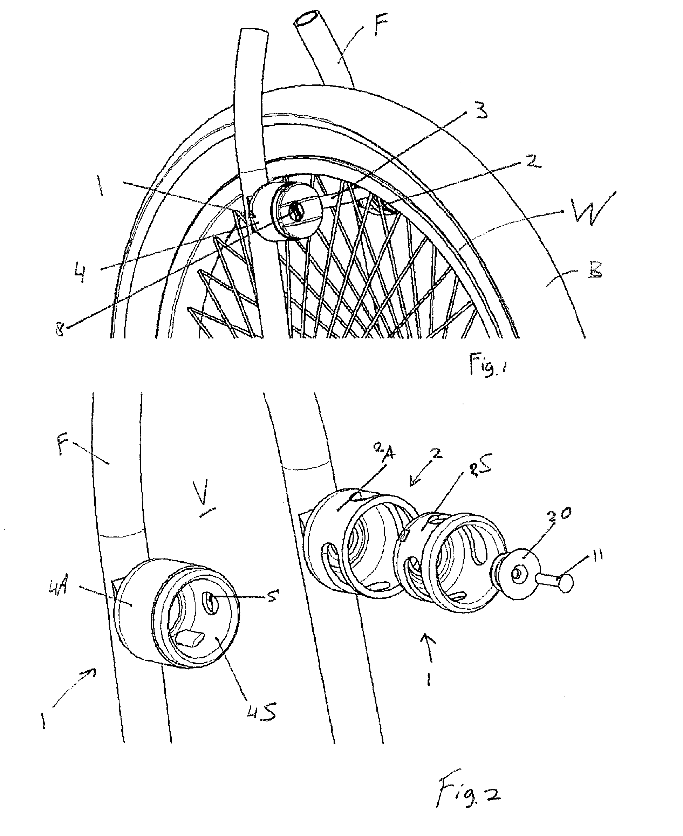

The first exemplary embodiment, shown in Fig. 1, comprises a lock 1 intended to be mounted on the frame, in particular fork F, of a bicycle, moped or such two-wheeler. The lock is provided with a holder part 2 and, pivotally connected thereto, a wheel blocking element in the shape of a lock pin 3. In addition to being pivotally connected to the holder part 2, the lock pin 3 can also be slideably connected thereto in its longitudinal direction. The lock pin 3 is only represented in Fig. 1.

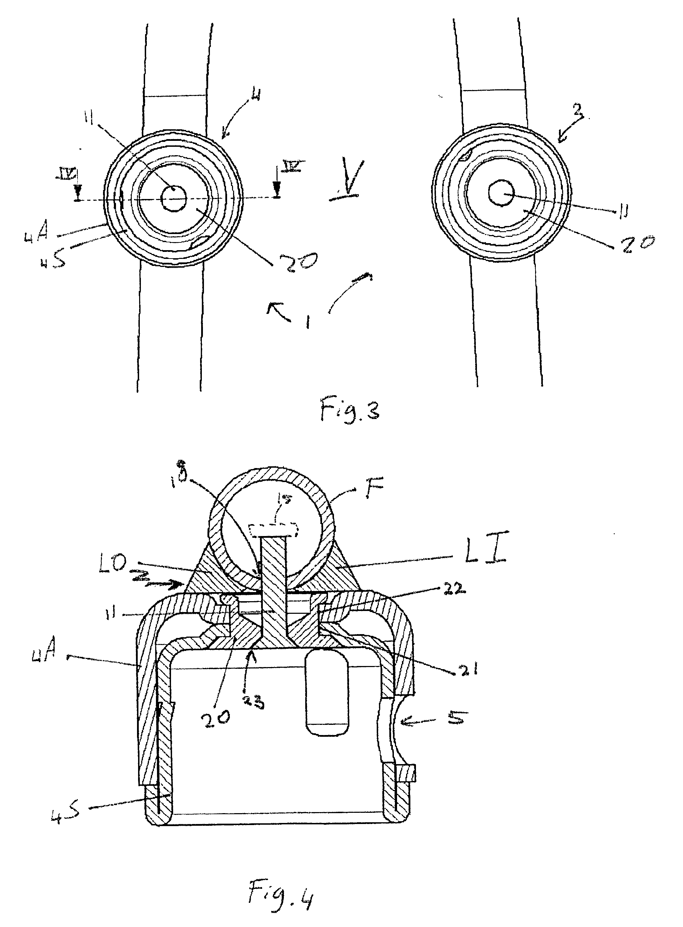

Further, a separate receiving part 4 is provided, having with a lock pin opening 5 (see Figs. 2 and 4) in which the free end of the lock pin 3 is received with the lock in closed condition. The holder part 2 and receiving part 4 are arranged on opposite sides of the wheel passage V surrounded by the frame F through which passage the wheel W to be blocked by the lock 1 extends. The holder part 2 and the receiving part 4 have been welded directly onto the legs of the fork F by suitable welded joints LI, LO (see Fig. 4). The welded joints LI, LO have been provided at or adjacent the two sides of the holder part and receiving part, respectively. The connection between the holder part 2 or receiving part 4, respectively, on the one side and the frame F on the other side can be realized in various other manners, for instance by means of suitable glue connections, integration and/or the like.

The receiving part 4 and the holder part 2 are each provided with an associated internal mechanism for the purpose of moving and locking/unlocking the lock pin 3. Fig. 5 shows, in cross section, an exemplary embodiment of the receiving part 4 provided with a suitable internal mechanism. The internal mechanism comprises a cylinder housing H in which the lock pin opening and the lock cylinder 8 are present, and a locking pawl 7 (not shown) to be locked an unlocked with the aid of the lock cylinder 8, which pawl is designed for engaging a free end of the lock pin 3. To that end, at the free end, the lock pin 3 is provided with a recess U the pawl can engage for locking, and from which the locking pawl can be moved by rotating the lock cylinder 8 in the receiving part, for releasing the lock pin 3. The operation of such an internal lock construction is known per se from practice and described, for instance, in inter alia the non-prepublished Dutch application NL 1026608 and the European patent application EP 1342652 in the name of applicant, which describes a lock according to the preamble of claim 1.

In the first exemplary embodiment, the lock 1 is specifically intended to be mounted on an aluminum frame F. To this end, the holder part 2 and receiving part 4 each comprise an assembly of an aluminum outside part of 2A, 4A, and a hardened steel reinforcing part 2S, 4S extending in this outside part 2A, 4A, The aluminum outside parts 2A, 4A can be connected to the aluminum frame F relatively firmly and inexpensively by means of aluminum welded joints LI, LO. As shown in Fig. 4, these welded joints comprise, for instance, inside welded parts LI which, after mounting, are located adjacent the wheel passage V and outside welded parts LO located, conversely, on the sides of the lock 1 remote from the wheel passage V. The steel inside parts 2S, 4S serve as reinforcement for the aluminum outside parts 2A, 4A.

Alternatively, the frame F can for instance comprise a substantially steel frame, or a frame manufactured substantially from for instance carbon fiber, Kevlar®, a composite material and/or a different suitable frame material. The outside parts of the lock 1 can for instance be manufactured from the same material as the frame material, which, as a rule, is advantageous when attaching or welding the lock 1 and the frame F together, or from a different material. The outside parts of the lock 1 can for instance be manufactured substantially from aluminum, cast aluminum, steel, carbon fiber, composite material and/or Kevlar® or from a different suitable material.

Further, the lock 1 needs not be provided with reinforcing parts although this is advantageous when at least an outside part of the lock is manufactured from a relatively weak material, for instance aluminum. In the first exemplary embodiment, the reinforcing parts 2S, 4S are manufactured from hardened steel, but can also be manufactured from a different suitable material.

As shown in Figs. 2 and 4, the outside parts of the first exemplary embodiment comprise cylindrical cups 4A welded by respective rear sides to the frame F. The steel inside parts 2S, 4S are also cylindrical cups, which have been slid into the aluminum cups 2A, 4A via front sides of these aluminum cups 2A. After mounting, the inside cup 2S, 4S and outside cup 2A, 4A of each assembly are interconnected by a hollow rivet 20 (see Fig. 4). To this end, the parts of the cups proximal to the frame F after assembly are provided with suitable rivet receiving openings 21, 22.

In the first exemplary embodiment, the holder part 2 and receiving part 4, at least both outside part/reinforcing part assemblies are provided with substantially cylindrical blocking elements 11 of hardened steel. These elements 11 are dimensioned to reach into the frame F substantially at right angles, via a suitable blocking opening 18 of the aluminum frame F, for the purpose of preventing undesired disassembly of the lock. Preferably, the diameter of the frame opening 18 is approximately equal to the diameter of a blocking element 11 to be inserted therein, so that a tight fit is obtained.

As shown in Fig. 4, after mounting, a blocking element 11 reaches between the welded joints LI, LO, substantially at right angles into the aluminum frame F. In this manner, each blocking element 11 is provided such that the blocking element 11 extends along an inside welded joint LI and reaches into the aluminum frame F, on a side of this welded joint LI remote from the wheel W.

The blocking elements 11 can each be designed in various manners, and be coupled to the receiving part 4 and holder part 2 in various manners. In the first exemplary embodiment, the blocking elements 11 are elongated pins provided in suitable passages 23 of the rivets 20. The heads of the blocking elements 11 are countersunk in the rivets 20 so that the blocking elements take up relatively little space in the receiving part 4 and holder part 2. Moreover, in this manner, the blocking elements 11 are relatively firmly coupled via the rivets 20 to the respective reinforcing parts 2S, 4S. Alternatively, the blocking elements 11 do not run through the rivets 20 but are coupled to other parts of the lock 1.

Preferably, after mounting, the blocking elements 11 are each freely axially rotatable relative to a respective reinforcing part 2S, 4S and outside part 2A, 4A. Moreover, it is advantageous when the blocking elements 11 have substantially smooth outsides, at least smooth longitudinal outside surfaces. A saw can hardly engage a rotatable blocking element 11 provided with a smooth outside. By arranging the blocking elements 11 so as to be rotatable and designing them to be smooth, undesired sawing through of the blocking elements 11 can be prevented well.

Further, after mounting, the internal mechanism of the holder part 2 and that of the receiving part 4 can for instance engage an end face of the respective blocking element 11 such that under the influence of an internal mechanism, the blocking element is held in a position reaching into the frame F and hence is simply confined in the construction (see Fig. 5).

As shown in Fig. 4, after mounting, the hardened steel blocking elements each form a saw barrier between an outside welded part LO and an inside welded part LI, at least viewed in a direction of sawing indicated with reference sign Z. A thief, attempting to saw through all aluminum welds LO, LI for removing the frame F from the lock 1, will start with the outside welded parts LO and saw in the direction of sawing Z, as the inside welded parts LI are, in general, not be accessible due to the presence of the adjoining wheel W and, for instance, a mudguard B. After sawing through an outside welded joint LO, the blocking element located therebehind, preferably rotatable and preferably smooth, will prevent further sawing through of the lock joint, at least slow it down considerably. In this manner, the hardened steel blocking elements 11 form anti-saw pins preventing the frame F from being sawed off.

Further, the blocking elements 11 reaching into the frame F can prevent the associated holder part 2 or receiving part 4, respectively, from tilting relative to the frame F. The blocking elements 11 can then, for instance, prevent the lock 1 from breaking open or bending outwards. If a thief applies so much force on the lock 1 that the lock still tears or breaks from the frame F, the chance is furthermore great that the frame F is then damaged by the blocking elements 11 such that the frame F is no longer usable, and therefore of less interest to the thief

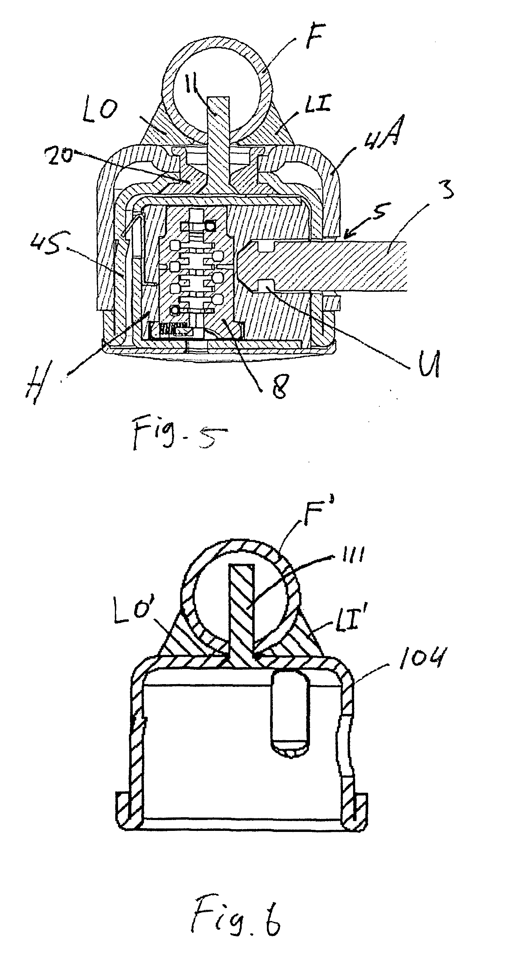

Fig. 6 shows, in cross section, a part of a second, alternative exemplary embodiment. The second exemplary embodiment is distinguished from the first exemplary embodiment represented in Figs. 1 - 5 in that the holder part and receiving part each have a hardened steel outside cup 104, each connected to a steel frame F' by welded joints LI', LO'. The exemplary embodiment represented in Fig. 6 is not provided with additional reinforcing cups provided in the outside cups. With this second exemplary embodiment as well, hardened steel anti-saw through pins 111 are provided, reaching from the outside cup 104 into the frame F for realizing an additional theft-resistant coupling to the frame.

It is clear that the invention is not limited to the exemplary embodiments described but that various modifications are possible within the framework of the invention as defined in the claims.

For instance, each outside part can be attached to an inside part in various manners, for instance by means of a rivet, bolt, screw, welded joint, glue connection and/or the like.

Further, the blocking elements 11 can be designed in different manners and have various forms, for instance a hardened steel pin, screw or the like. In a further elaboration of the invention, the blocking element is provided with barbs, anchoring means, screw thread and/or foldable engaging means, that can engage an inside of the frame F to prevent withdrawal of the blocking element. Such a foldable engaging part of blocking element 11 has, for instance, been schematically indicated in broken lines 15 in Fig. 5.

In addition, the holder part 2 and receiving part 4 can each be provided with one or more blocking elements 11.

## Claims

1. A lock, intended to be mounted on a frame (F) of a bicycle, moped, or such two wheeler, wherein the lock is provided with a holder part (2) and a lock pin (3) pivotally connected to the holder part (2), and with a receiving part (4) provided with a lock pin opening (5) for receiving a free end of the lock pin (3) with the lock (1) in closed position, **characterized in that** said a holder part (2) and receiving part (4) each being provided with a steel blocking element (11) for reaching into the frame (F) via a suitable blocking opening (18) of said frame (F) for the purpose of preventing undesired disassembly of the lock.

2. A lock according to claim 1, wherein said a holder part (2) and receiving part (4) each comprise an outside part (2A, 4A) to be attached to said frame (F), the outside part being manufactured substantially from aluminum, carbon fiber, a composite material or Kevlar®, while said frame (F) too is preferably manufactured substantially from aluminum, carbon fibre, composite material or Kevlar®, respectively.

3. A lock according to claim 1 or 2, wherein each said blocking element (11) is manufactured from hardened steel.

4. A lock according to any one of the preceding claims, wherein after mounting, an internal lock mechanism of a respective holder part or receiving part engages the respective blocking element (11) for keeping the blocking element (11) in a position reaching into the frame (F).

5. A lock according to any one of preceding claims, wherein the receiving part is provided with a cylinder housing in which the lock pin opening and a lock cylinder are present, and a locking pawl which can be locked and released with the aid of the lock cylinder, and which is designed for engaging a free end of the lock pin, which lock pin is provided to that end at the free end with a recess the locking pawl can engage for locking, and from which the pawl can be moved by rotating the lock cylinder in the receiving part, for releasing the lock pin.

6. A lock according to any one of the preceding claims, wherein said holder part (2) and receiving part (4) each comprise an assembly of an outside part (2A, 4A) and a reinforcing part (2S, 4S) extending in this outside part (2A, 4A), the reinforcing part (2S, 4S) preferably being manufactured from steel.

7. A lock according to claim 6, wherein said blocking element (11) is at least coupled or connected to a respective reinforcing part (2S, 4S).

8. A lock according to claim 6 or 7, wherein said outside part and the reinforcing part extending therein are interconnected by a connecting means, for instance a rivet, while said blocking element (11) extends at least through said connecting means or is coupled to that a connecting means.

9. A lock according to any one of the preceding claims, wherein said blocking element (11) has a substantially smooth outside.

10. A lock according to any one of the preceding claims, wherein, after mounting, said blocking element (11) is rotatable relative to a holder part or receiving part, respectively.

11. A lock according to at least claim 1, wherein said holder part and receiving part (104) each have an outside part (104) to be attached to said frame (F'), the outside part being substantially manufactured from steel while said frame (F') too is preferably substantially manufactured from steel.

12. An assembly provided with a bicycle, moped, or such two-wheeler comprising at least one frame (F), the assembly being provided with a lock (1) according to any one of the preceding claims, which lock (1) has been provided on said frame (F), the frame (F) being provided, on the sides proximal to the lock (1), with blocking openings (18), the blocking elements (11) of the lock (1) reaching into the blocking openings (18) of said frame (F) for the purpose of preventing undesired disassembly of the lock while preferably, said receiving part and holder part of the lock (1) have been welded to the frame (F).

13. An assembly according to claim 12, wherein the holder part or receiving part, respectively, of the lock are each attached to the frame (F) at least at or adjacent opposite sides, by means of welded joints (LI, LO), while said blocking element (11) extends through the frame (F) between those welded joints.

14. A method for mounting a lock according to any one of claims 1 - 10 to a frame, and/or for mounting an assembly according to claim 12 or 13, at least comprising, in suitable order:
- attaching, for instance welding, outside parts of the lock (1) onto the frame (F);
- providing blocking openings (18) in the frame (F); and
- inserting said blocking elements (11) into the blocking openings (18).

15. A method according to claim 14, wherein each lock outside part is attached at least on or adjacent the side of the frame (F) proximal to the wheel passage (3) by means of a suitable attachment (LI), the blocking element (11) being provided such that the blocking element (11) extends on a side of the attachment (LI) remote from the wheel passage (3) along said attachment (LI).

## Patentansprüche

1. Ein Schloss, das dafür vorgesehen ist, an einem Rahmen (F) eines Fahrrades, Mofas oder eines solchen Zweirades montiert zu werden, worin das Schloss mit einem Halterungsteil (2) und mit einem Arretierstift (3), welcher drehbar mit dem Halterungsteil (2) verbunden ist, versehen ist, sowie mit einem Aufnahmeteil (4), welches mit einer Öffnung (5) für den Arretierstift zur Aufnahme eines freien Endes des Arretierstiftes (3) versehen ist, wenn das Schloss (1) in verschlossener Position ist, was **dadurch gekennzeichnet ist, dass** besagte Halterungsteil (2) und Aufnahmeteil (4) beide mit einem Blockierungselement (11) aus Stahl versehen sind, welches über eine passende Blockieröffnung (18) des besagten Rahmens (F) in den Rahmen (F) hinein reicht, zu dem Zweck, eine unerwünschte Demontage des Schlosses zu verhindern.

2. Ein Schloss gemäß Anspruch 1, worin besagte Halterungsteil (2) und Aufnahmeteil (4) beide ein äußeres Teil (2A, 4A) umfassen, welche an dem besagten Rahmen (F) anzubringen sind, wobei das besagte äußere Teil im Wesentlichen aus Aluminium, Kohlefaser, einem Verbundmaterial oder Kevlar® hergestellt ist, während der besagte Rahmen (F) dem entsprechend ebenfalls vorzugsweise im Wesentlichen aus Aluminium, Kohlefaser, Verbundmaterial oder Kevlar® besteht.

3. Ein Schloss gemäß Anspruch 1 oder 2, worin jedes besagte Blockierungselement (11) aus gehärtetem Stahl hergestellt ist.

4. Ein Schloss gemäß irgendeinem der vorausgehenden Ansprüche, worin nach der Montage ein interner Schlossmechanismus eines entsprechenden Halterungsteils oder Aufnahmeteils mit dem entsprechenden Blockierungselements (11) ineinander greift, um das Blockierungselement (11) in einer Position zu halten, in welcher es in den Rahmen (F) hineinreicht.

5. Ein Schloss gemäß irgendeinem der vorausgehenden Ansprüche, worin das Aufnahmeteil mit einem zylindrischen Gehäuse versehen ist, in welchem sich die Öffnung für den Arretierstift und ein Schließzylinder befinden, sowie ein Sperrriegel, der mit Hilfe des Schließzylinders verschlossen und entriegelt werden kann, und welcher so gestaltet ist, dass er mit einem freien Ende des Arretierstifts ineinander greift, wobei dieser Arretierstift an diesem Ende an dem freien Ende mit einer Aussparung versehen ist, in welche der Sperrriegel zum Verschließen eingreifen kann, und von welcher die Sperre durch Drehen des Schließzylinders in das Aufnahmeteil bewegt werden kann, um den Arretierstift zu entriegeln.

6. Ein Schloss gemäß irgendeinem der vorausgehenden Ansprüche, worin das besagte Halterungsteil (2) und Aufnahmeteil (4) beide einen Zusammenbau aus einem äußeren Teil (2A,4A) und einem verstärkenden Teil (2S, 4S), der sich in diesen äußeren Teil (2A, 4A) erstrecken, umfassen, wobei das verstärkende Teil (2S, 4S) vorzugsweise aus Stahl hergestellt ist.

7. Ein Schloss gemäß Anspruch 6, worin das besagte Blockierungselement (11) wenigstens mit einem entsprechenden verstärkenden Teil (2S, 4S) gekoppelt oder mit ihm verbunden ist.

8. Ein Schloss gemäß Anspruch 6 oder 7, worin das besagte äußere Teil und das verstärkende Teil, das sich darin erstreckt, durch ein Verbindungsglied miteinander verbunden sind, zum Beispiel eine Niete, während sich das besagte Blockierungselement (11) wenigstens durch das besagte Verbindungsglied erstreckt oder an das eine Verbindungsglied gekoppelt ist.

9. Ein Schloss gemäß irgendeinem der vorausgehenden Ansprüche, worin das besagte Blockierungselement (11) ein im Wesentlichen glattes Äußeres hat.

10. Ein Schloss gemäß irgendeinem der vorausgehenden Ansprüche, worin das besagte Blockierungselement (11) nach der Montage relativ zu einem entsprechenden Halterungsteil oder Aufnahmeteil drehbar ist.

11. Ein Schloss gemäß wenigstens Anspruch 1, worin das besagte Halterungsteil und Aufnahmeteil (104) beide ein äußeres Teil (104) besitzen, um an dem besagten Rahmen (F') angebracht zu werden, wobei das äußere Teil im Wesentlichen aus Stahl hergestellt ist, während der besagte Rahmen (F') ebenfalls vorzugsweise im Wesentlichen aus Stahl besteht.

12. Ein Zusammenbau, der mit einem Fahrrad, Mofa oder einem solchen Zweirad, welches wenigstens einen Rahmen (F) umfasst, bereitgestellt wird, wobei der Zusammenbau mit einem Schloss (1) gemäß irgendeinem der vorausgehenden Ansprüche versehen ist, und dieses Schloss (1) wird an dem besagten Rahmen (F) bereitgestellt, wobei dieser Rahmen (F) an den Seiten in der Nähe des Schlosses (1) mit Blockieröffnungen (18) versehen ist, und die Blockierungselemente (11) des Schlosses (1) in die Blockieröffnungen (18) des besagten Rahmens (F) hinein reichen, zu dem Zweck, eine unerwünschte Demontage des Schlosses zu verhindern, während das besagte Aufnahmeteil und Halterungsteil des Schlosses (1) vorzugsweise an dem Rahmen (F) angeschweißt sind.

13. Ein Zusammenbau gemäß Anspruch 12, worin das Halterungsteil oder Aufnahmeteil des Schlosses beide vermittels von angeschweißten Verbindungen (LI, LO) jeweils an wenigstens benachbarten, einander gegenüberliegenden Seiten des Rahmens (F) angebracht sind, während das besagte Blockierungselement (11) sich durch den Rahmen (F) hindurch zwischen diesen angeschweißten Verbindungen erstreckt.

14. Ein Verfahren zur Montage eines Schlosses gemäß irgendeinem der Ansprüche 1 - 10 an einem Rahmen und/oder zur Montage eines Zusammenbaus gemäß Anspruch 12 oder 13, was in geeigneter Anordnung wenigstens Folgendes umfasst:
- das Anbringen, zum Beispiel durch Schweißen, der äußeren Teile des Schlosses (1) an dem Rahmen (F);
- das Bereitstellen von Blockieröffnungen (18) im Rahmen (F); und
- das Einsetzen der besagten Blockierungselemente (11) in die Blockieröffnungen (18).

15. Ein Verfahren gemäß Anspruch 14, worin jedes äußere Teil des Schlosses wenigstens an der Seite des Rahmens (F), die nahe am Raddurchlauf (3) liegt, oder angrenzend an diese, vermittels einer geeigneten Befestigung (LI) angebracht wird, wobei das Blockierungselement (11) solcher Art bereitgestellt wird, das sich das Blockierungselement (11) an einer Seite der Befestigung (LI), die vom Raddurchlauf (3) entfernt liegt, entlang der besagten Befestigung (LI) erstreckt.

## Revendications

1. Verrou destiné à être monté sur un châssis (F) de vélo, cyclomoteur ou autre deux-roues, dans lequel le verrou est équipé d'une partie de support (2) et d'une cheville de verrouillage (3) reliée de manière pivotante à la partie de support (2), et d'une partie de réception (4) dotée d'une ouverture de cheville de verrouillage (5) pour recevoir une extrémité libre de la cheville de verrouillage (3) avec le verrou (1) en position fermée, **caractérisé en ce que** lesdites partie de support (2) et partie de réception (4) comportant chacune un élément de blocage en acier (11) pour s'étendre à l'intérieur du châssis (F) via une ouverture de blocage appropriée (18) dudit châssis (F) afin d'éviter un démontage non souhaité du verrou.

2. Verrou selon la revendication 1, dans lequel lesdites partie de support (2) et partie de réception (4) comprennent chacune une partie externe (2A, 4A) à fixer au dit châssis (F), la partie externe étant fabriquée essentiellement à partir d'aluminium, de fibre de carbone, d'un matériau composite ou Kevlar^{®}, tandis que ledit châssis (F) également est de préférence fabriqué essentiellement à partir d'aluminium, de fibre de carbone, de matériau composite ou Kevlar^{®}, respectivement.

3. Verrou selon la revendication 1 ou 2, dans lequel chacun desdits éléments bloquants (11) est fabriqué à partir d'acier inoxydable.

4. Verrou selon l'une quelconque des revendications précédentes, dans lequel, après le montage, un mécanisme de verrouillage interne d'une partie de support respective ou partie de réception met en prise l'élément de blocage respectif (11) pour maintenir l'élément de blocage (11) dans une position s'étendant jusque dans le châssis (F).

5. Verrou selon l'une quelconque des revendications précédentes, dans lequel la partie de réception est dotée d'un boîtier de cylindre dans lequel l'ouverture de cheville de verrouillage et un cylindre de verrouillage sont présents, et un cliquet de verrouillage qui peut être verrouillé et relâché avec l'aide du cylindre de verrouillage, et qui est conçu pour venir en prise avec une extrémité libre de la cheville de verrouillage, ladite cheville de verrouillage étant dotée, à cette fin, au niveau de l'extrémité libre, d'un évidement avec lequel le cliquet de verrouillage peut venir en prise pour le verrouillage, et à partir duquel le cliquet peut être déplacé en tournant le cylindre de verrouillage dans la partie de réception, pour relâcher la cheville de verrouillage.

6. Verrou selon l'une quelconque des revendications précédentes, dans lequel lesdites partie de support (2) et partie de réception (4) comprennent chacune un ensemble d'une partie externe (2A, 4A) et d'une partie de renfort (2S, 4S) s'étendant dans cette partie externe (2A, 4A), la partie de renfort (2S, 4S) étant de préférence fabriquée à partir d'acier.

7. Verrou selon la revendication 6, dans lequel ledit élément de blocage (11) est au moins couplé ou relié à une partie de renfort respective (2S, 4S).

8. Verrou selon la revendication 6 ou 7, dans lequel lesdites partie externe et partie de renfort s'étendant à l'intérieur sont interconnectées par un moyen d'assemblage, par exemple un rivet, tandis que ledit élément de blocage (11) s'étend au moins à travers ledit moyen d'assemblage ou est couplé à ce moyen d'assemblage.

9. Verrou selon l'une quelconque des revendications précédentes, dans lequel ledit élément de blocage (11) a un extérieur relativement lisse.

10. Verrou selon l'une quelconque des revendications précédentes, dans lequel, après le montage, ledit élément de blocage (11) peut être tourné par rapport à une partie de support ou partie de réception, respectivement.

11. Verrou selon au moins la revendication 1, dans lequel lesdites partie de support et partie de réception (104) ont chacun une partie externe (104) à fixer au dit châssis (F'), la partie externe étant essentiellement fabriquée à partir d'acier tandis que ledit châssis (F') est également de préférence essentiellement fabriqué à partir d'acier.

12. Ensemble comportant un vélo, cyclomoteur ou autre deux-roues comprenant au moins un châssis (F), l'ensemble comportant un verrou (1) selon l'une quelconque des revendications précédentes, ledit verrou (1) étant installé sur ledit châssis (F), le châssis (F) comportant, sur les côtés proximaux du verrou (1), d'ouvertures de blocage (18), les éléments de blocage (11) du verrou (1) s'étendant jusqu'aux ouvertures de blocage (18) dudit châssis (F) afin d'empêcher une ouverture non souhaitée du verrou tandis que, de préférence, lesdites partie de réception et partie de support du verrou (1) ont été soudées au châssis (F).

13. Ensemble selon la revendication 12, dans lequel la partie de support ou la partie de réception, respectivement, du verrou sont chacune fixée au châssis (F) au moins au niveau de côtés opposés ou de manière adjacente aux côtés opposés, au moyen de joints soudés (LI, LO) tandis que lesdits éléments de blocage (11) s'étendent à travers le châssis (F) entre ces joints soudés.

14. Procédé de montage d'un verrou selon l'une quelconque des revendications 1 à 10 sur un châssis, et/ou de montage d'un ensemble selon la revendication 12 ou 13, comprenant au moins, selon un ordre approprié, les étapes consistant à :
- fixer, par exemple en soudant, des parties externes du verrou (1) sur le châssis (F) ;
- prévoir des ouvertures de blocage (18) dans le châssis (F) ; et
- insérer lesdits éléments de blocage (11) dans les ouvertures de blocage (18).

15. Procédé selon la revendication 14, dans lequel chaque partie externe de verrouillage est fixée au moins sur le côté du châssis (F) ou de manière adjacente à celui-ci de manière proximale par rapport au passage de la roue (3) au moyen d'une fixation appropriée (LI), l'élément de blocage (11) étant prévu de sorte que l'élément de blocage (11) s'étend sur un côté de la fixation (LI) éloigné du passage de la roue (3) le long de ladite fixation (LI).
